# EUROPEAN PATENT APPLICATION

(11) **EP 4 491 547 A1**
(43) Date of publication of application: **15.01.2025**
(21) Application number: 23184554.6
(22) Date of filing: 10.07.2023
(51) Int. Cl.: B65G 47/29, B65G 47/88

(54) **FEED APPARATUS FOR FEEDING TUBES TO A TUBE WORKING MACHINE, AND METHOD FOR FEEDING TUBES TO A TUBE WORKING MACHINE BY MEANS OF THE APPARATUS**

(71) Applicant: Bystronic Laser AG, 3362 Niederönz (CH)
(72) Inventor: Fontana, Luca, Ospitaletto BS (IT); Issmail, Ahmad, Brescia BS (IT)
(74) Representative: Perani & Partners S.p.A.

(57) **Abstract**

A feed apparatus (1) for feeding tubes (T) to a tube working machine, comprises a conveyor belt (2). A vertical singularizator (6) comprises a first stop element (61), arranged at a stop height (H) to let a single row of tubes (T) on the conveyor belt (2) pass below the first stop element (61). A horizontal singularizator (7), comprises a second stop element (71) arranged at a stop length (L) downstream a limit element (51) of a lift device (5), to let that a single tube (T) of the tube row reach the second stop element (71) beyond the limit element (51). The first and second stop elements (61 71) can be moved along respective rotation paths, to adjust the stop height and length (H, L) for different tubes (T). The lift device (5) lifts from the conveyor belt (2) tubes (T) up to the limit element (51), and the second stop element (71) can be released to let a single tube (T) pass. A conveyor loader (8) may guide rolling tubes (T) and sliding tubes (T) from a chute (3) to the conveyor belt (2).

## Description

### Technical field

The present invention relates to the field of equipment and components for feeding tubes to a tube working machine.

In detail, the present invention relates to an apparatus for feeding tubes to a tube working machine, particularly a laser tube cutting machine, and to the method of feeding the tubes.

### State of the art

Laser cutting is a well-known technology that uses a laser beam to vaporize materials, resulting in a cut edge or an engrave.

Such laser cutting technology has been combined with computer numerical control in CNC machines to automate cutting operations of workpieces such as metal sheets or tubes.

Known laser tube working machines comprise a working station where a laser is configured to perform cutting operations on a tube to be worked. For this purpose, a single tube is usually picked by a handler and is axially driven to the working station. Different systems are known to singularize a single tube out of a bundle of tubes, and convey the tube transversely to the axial direction to the handler.

An example system to singularize a tube from a bundle of tubes, and convey the tube to a tube working machine, is described in US 8071909. Tubes or similar materials are loaded as a bundle by an automatic loader. A two-tier stack preventive device is adjusted in height to prevent two or more tiers of tubes to reach a stopper. The stopper is adjusted horizontally to regulate the forefront position of the tubes.

A swing arm passes one tube above and beyond the stopper, and lays the tube onto a support member on an inclined conveyor. The inclined conveyor moves the support member downward to discharge the tube onto a further horizontal conveyor.

### Scope of the invention

One object of the present invention is to provide a feed apparatus and a feed method for feeding tubes to a tube working machine, achieving a simplified singularization for tubes of different shapes and dimensions.

The specified technical object and the specified aims are substantially achieved by a feed apparatus, and a method for feeding tubes to a tube working machine, comprising the technical features described in one or more of the appended claims.

### Summary of the invention

The feed apparatus object of the present invention comprises a conveyor belt, having a top surface with a tube receiving area for receiving a bundle of tubes, each tube extending mainly in an axial direction, and a tube discharge area. The conveyor belt is configured to move the tubes in a feed direction, transverse to the axial direction, from the tube receiving area to the tube discharge area.

A lift device has a limit element arranged between the tube receiving area and the tube discharge area of the conveyor belt. The lift device is configured to lift, from the conveyor belt, tubes arranged between the tube receiving area and the limit element.

A vertical singularizator comprises a first stop element, arranged in the feed direction upstream the limit element of the lift device and at a stop height above the conveyor belt. The stop height is such that a single row of tubes on the conveyor belt may pass in the feed direction below the first stop element, while the first stop element is configured to stop tubes moving in the feed direction over such row.

A first drive is connected to the first stop element, and is configured to adjust the stop height for different tubes, by moving the first stop element along a first predetermined rotation path.

A horizontal singularizator comprises a second stop element movable between a stop position and a release position. In the stop position, the second stop element is arranged in the feed direction at a stop length downstream the limit element of the lift device, and is configured to stop tubes moving on the conveyor belt in the feed direction up to the stop length. The stop length is such that a single tube may be arranged between the second stop element and the limit element of the lift device. In the release position, the second stop element is configured to let such single tube move on the conveyor belt in the feed direction beyond the stop length.

A second drive is connected to the second stop element, and is configured to move the second stop element between the stop position and the release position, and to adjust the stop length for different tubes, by moving the second stop element along a second predetermined rotation path.

Advantageously, singularization takes place directly on a possibly unique conveyor, which receives a tube bundle and does not need to include special supports to hold a single tube, as it was the case for US 8071909. Moreover, the second stop element may be released by the same second drive adjusting its position, to let an isolated tube pass on the conveyor without the need for a mechanism to pass the tube above.

Additionally, the first and second stop elements are movable along respective rotation paths, which simplifies their actuation despite the need of horizontal and vertical regulations.

According to one embodiment, the first drive comprises a first motor and a rotatable first drive arm connecting the first motor to the first stop element, and/or the second drive comprises a second motor and a rotatable second drive arm connecting the second motor to the second stop element.

According to one embodiment, the first drive comprises a first pivot, offset from the first motor, and a rotatable first driven arm, offset from the first drive arm and connecting the first pivot to the first stop element, and/or the second drive comprises a second pivot, offset from the second motor, and a rotatable second driven arm, offset from the second drive arm and connecting the second pivot to the second stop element.

According to one embodiment, the first and/or the second motor is arranged below the top surface of the conveyor belt.

According to one embodiment, in the release position, the second block element is arranged below the top surface of the conveyor belt.

According to one embodiment, the apparatus comprises a chute, arranged to discharge a bundle of tubes to the tube receiving area of the conveyor belt.

According to one embodiment, the chute is movable between a lower discharge position, for discharging on the conveyor belt rolling tubes being suitable to roll down the chute, in particular rounded tubes, and a higher discharge position, for discharging on the conveyor belt sliding tubes being unsuitable to roll down the chute, in particular prismatic tubes.

According to one embodiment, the apparatus comprises a conveyor loader configured to guide tubes from the chute to the conveyor belt. The conveyor loader is configured to switch between a rolling tube configuration and a different sliding tube configuration, for guiding from the chute to the conveyor belt. In the rolling tube configuration, rolling tubes are suitable to roll down the chute, in particular rounded tubes. In the sliding tube configuration, sliding tubes are unsuitable to roll down the chute, in particular prismatic tubes.

According to one embodiment, the conveyor belt has, at the tube receiving area, a round portion winded on a pulley, and an even portion downstream the winded portion. In the sliding tube configuration, the conveyor loader forms a bridge for tubes to slide from the chute to the even portion of the conveyor belt. In the rolling tube configuration, the conveyor loader lets tubes rolling down the chute reach the round portion of the conveyor belt and be lifted thereby upon the even portion.

According to one embodiment, the apparatus comprises a loader drive configured to switch the conveyor loader between the rolling tube configuration and the sliding tube configuration, by rotating the conveyor loader.

According to one embodiment, the chute is movable between a storage position, for receiving and storing a bundle of tubes therein, and a discharge position, to discharge the bundle of tubes on the conveyor belt.

According to one embodiment, a lift drive is configured to move the lift device between a raised position and a lowered position. In the raised position, the limit element projects above the conveyor belt to separate tubes upstream and downstream the limit element. In the lowered position, the limit element is arranged below the top surface of the conveyor belt.

According to one embodiment, the lift device has a support portion, extending from the limit element toward the tube receiving area of the conveyor belt. In the raised position, the support portion is arranged above the conveyor belt to sustain and lift from the conveyor belt tubes arranged between the tube receiving area and the limit element. In the lowered position, the support portion is arranged below the top surface of the conveyor belt to let tubes lay on the conveyor belt.

According to one embodiment, the apparatus comprises a control unit configured to receive an indication of a tube type, and control the first and the second drive to set a specific stop height and a specific stop length, which are selected based on the tube type.

According to one embodiment, the apparatus comprises a control unit configured to, in order control the second stop element to assume the stop position, control the conveyor belt to move tubes in the feed direction up to the second stop element, control the lift device to lift from the conveyor belt tubes arranged between the tube receiving area and the limit element, control the second stop element to assume the release position, and control the conveyor belt to move to the tube discharge area a single tube remaining between the second stop element and the limit element.

According to one embodiment, the apparatus comprises a tube handler, configured to pick a single tube from the tube discharge area of the conveyor belt.

The present invention further relates to a method for feeding tubes to a tube working machine, by means of the described apparatus. The first stop element of the vertical singularizator is moved along a first predetermined rotation path, to adjust it at a predetermined stop height above the conveyor belt. The second stop element of the horizontal singularizator is moved along a second predetermined rotation path, to adjust it in the feed direction at a predetermined stop length downstream the limit element of the lift device.

A bundle of tubes is received on the tube receiving area. The tubes have a tube height not greater than the predetermined stop height, and a tube width not greater than the predetermined stop length. The tubes are moved on the conveyor belt in the feed direction, from the tube receiving area toward the tube discharge area. Moving the tubes on the conveyor belt comprises passing a single row of tubes below the first stop element of the vertical singularizator, and stopping, by the first stop element, tubes over said row moving in the feed direction.

The second stop element of the horizontal singularizator, in the stop position, stops the tubes moving in the feed direction on the conveyor belt, such that a single tube of the row of tubes is arranged between the second stop element and the limit element of the lift device.

The lift device lifts from the conveyor belt tubes arranged between the tube receiving area and the limit element. The second stop element is moved to the release position. The conveyor belt moves the single tube in the feed direction beyond the stop length.

### BRIEF DESCRIPTION OF THE DRAWINGS

Further characteristics and advantages of the present invention will appear more clearly from the indicative, and therefore non-limiting, description of a preferred but not exclusive embodiment of the apparatus as illustrated in the enclosed drawings in which:

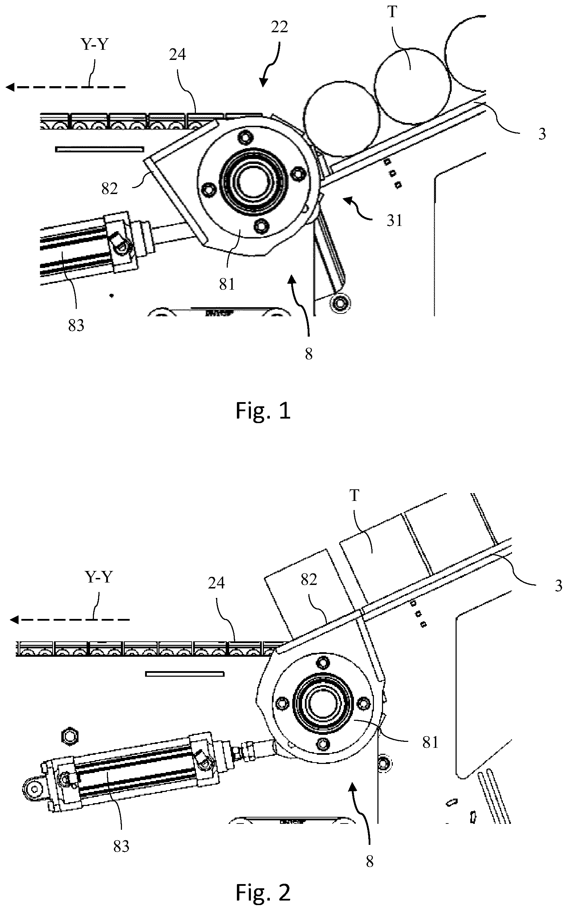

- Figure 1 shows a side view of a portion of an apparatus according to an embodiment of the invention, where rolling tubes are loaded from a chute onto a conveyor belt;
- Figure 2 shows a side view of the portion of the apparatus of figure 1, where sliding tubes are loaded from the chute onto the conveyor belt;

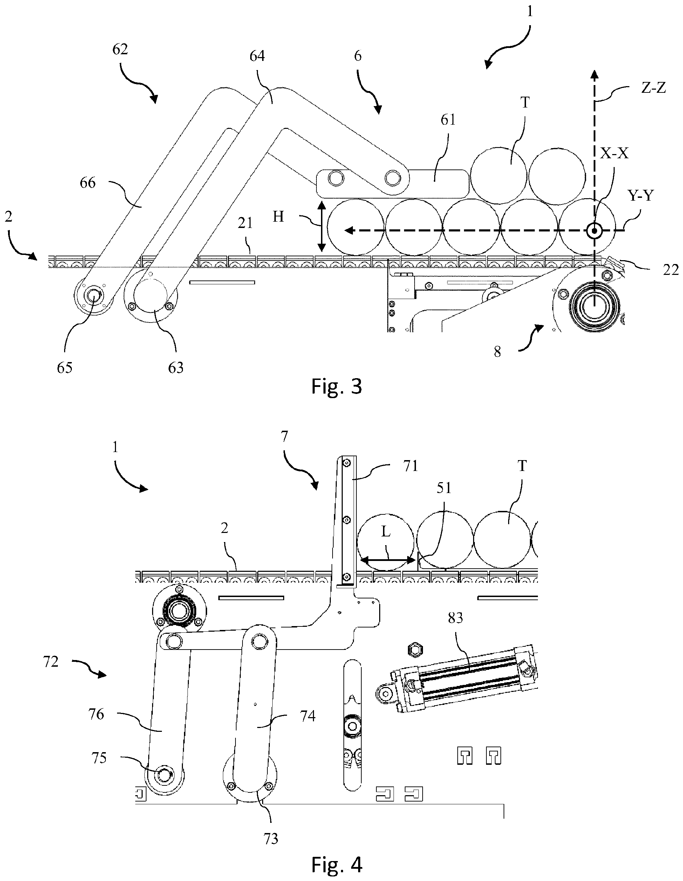

- Figure 3 shows a side view of a portion of the apparatus where a vertical singularizator blocks tubes moving on the conveyor belt above a base row;
- Figure 4 shows a side view of a portion of the apparatus where a single tube is isolated from the base row by a horizontal singularizator, while the remaining tubes are lifted by a lift device;
- Figure 5 shows an enlarged detail of figure 4;
- Figures 6 and 7 show two opposite side views of the apparatus of figure 1;
- Figure 8 shows a perspective view of two example blocks of the apparatus of Figure 1; and
- Figure 9 shows a side view of the horizontal singularizator of figure 4, in a release position.

### DETAILED DESCRIPTION

The present invention relates to feed apparatus 1 for feeding tubes T to a tube working machine (not shown), in particular to a laser tube cutting machine.

In the context of the present invention the term "tube" is used to indicate an elongated structure extending along a tube axis between opposite ends. It is worth specifying that the term "tube" is not limited to pipes - i.e. rounded tube - but it also refers to any elongated structure with, for example, rectangular, squared or oval hollow cross section, and optionally profiles with opened cross sections like C-, U-, V-, X-, T, H- or cross-shaped profiles.

For some aspects of the invention, it is worth distinguishing two classes of tubes T, depending on their shape. A first class includes rolling tubes T, which are tubes T suitable to roll down a chute, and in particular the chute 3 that is described below. In general, this class includes fully rounded tubes, such tubes T with a circular cross section, but also partially rounded tubes, in so far as this permits their rolling. This class may also include non-rounded tubes T which may nevertheless roll, such as tubes T with a regular octagonal cross-section, or similar.

A second class includes sliding tubes T, which are tubes T unsuitable to roll down the chute 3, and which therefore may slide down thereon. For example, this class includes tubes T with a rectangular cross-section, and in general prismatic tubes having at least one internal angle small enough to prevent rolling down the chute 3. This may depend on the slope of the chute and on the position of the internal angle relative to a tube barycenter.

The apparatus 1 comprises a conveyor belt 2, having a top surface 21 with a tube receiving area 22 for receiving a bundle of tubes T, and a tube discharge area 23. The tube receiving area 22 and the tube discharge area 23 are spaced in a feed direction Y-Y, and the conveyor belt 2 is configured to move the tubes T in the feed direction Y-Y from the tube receiving area 22 to the tube discharge area 23. In the following, the terms upstream and downstream will be used with reference to the advancement of the tubes in the feed direction Y-Y.

In a known manner, the conveyor belt 2 has, at the tube receiving area 22, a round portion winded on a pulley. Then, the conveyor belt 2 has an even portion 24 downstream the round portion. A further round portion is provided at the tube discharge area 23, winded on a further pulley and downstream the even portion.

As described below, means are provided along the conveyor belt 2 to singularize a single tube T from the bundle of tubes T, before the tube T reaches the tube discharge area 23.

It is worth noting that the tubes T of the bundle are received on the conveyor belt 2 arranged with their tube axis parallel to each other, and extending in an axial direction X-X, transverse, preferably perpendicular, to the feed direction Y-Y.

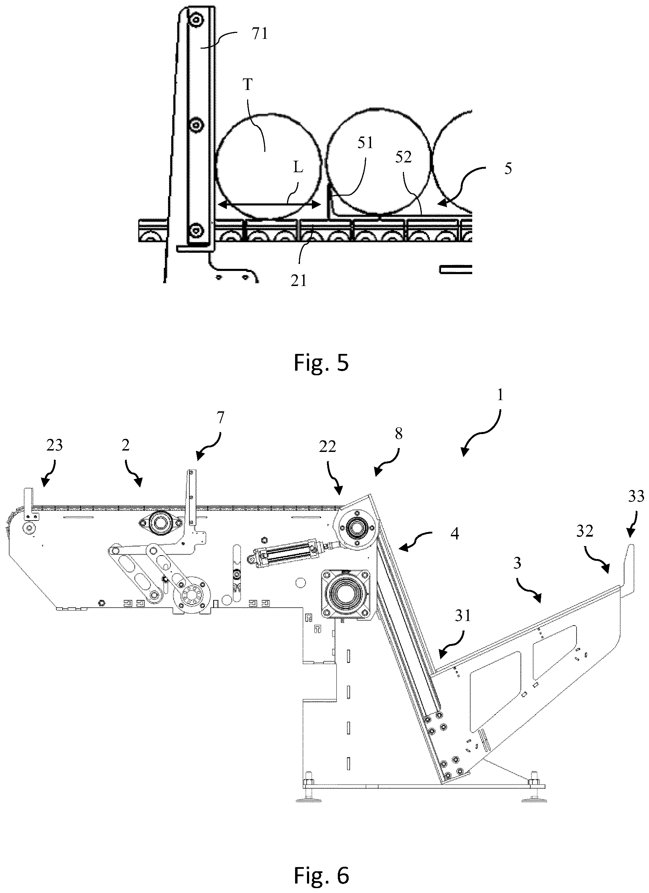

In the preferred embodiments, the apparatus 1 comprises a chute 3, arranged upstream the conveyor belt 2 to discharge the bundle of tubes T to the tube receiving area 22 of the conveyor belt 2. Preferably, the chute 3 is movable between a storage position, as shown in figures 6-8, for receiving and storing a bundle of tubes T therein, and one or more discharge positions, to discharge the bundle of tubes T on the conveyor belt 2.

Preferably, the storage position is a lowered position, in which the chute 3 is lowered to ease an operator or a machinery to load tubes T in the compartment. In turn, each discharge position is a raised position, in which the chute 3 is raised compared to the storage position. Discharge positions with the chute 3 in different heights can be set depending on how many tubes T are present on the chute 3, and on their side. In general, in all the discharge positions the height of the chute 3 is selected such that a top group of tubes T on the chute 3, preferably a top row of tubes T on the chute 3, may be discharged on the conveyor belt 2. As tubes T on the chute 3 are discharged, their number lowers and the chute 3 may be moved to upper discharge positions, preferably by discrete steps, to discharge further tubes T. In order to complete the discharge of the tubes T, preferably at least the top end portion 32 of the chute 3 is moved above the conveyor belt 2.

For this purpose, preferably the apparatus 1 comprises a chute sensor, configured to detect a height of the chute 3, and a tube height sensor, configured to detect a height of the top group of tubes T on the chute 3.

The chute 3 has a bottom end portion 31, that is proximal to the tube receiving area 22 of the conveyor belt 2 when the chute 3 is in the discharge position. Moreover, the chute 3 has a top end portion 32 distal from the tube receiving area 22. Therefore, the chute 3 is configured to guide a bundle of tubes T from the top end portion 32 to the bottom end portion 31.

Preferably, a chute guide 4 is configured to guide the chute 3 between the storage and discharge positions. In particular, the chute 3 is slidable along the chute guide 4. In the preferred embodiment, the chute 3 is connected to the chute guide 4 at the bottom end portion 31. A chute drive, not shown, is configured to move the chute 3 between the storage and discharge positions.

In a known manner, the chute 3 may define a compartment for supporting the bundle of tubes T, at least in the storage position. In particular, the chute 3 may have a rear wall 33 atop the top end portion 32, to delimit a rear side of the compartment. In the storage position, a front side of the compartment may be delimited by the chute guide 4. In one or more discharge positions, the chute 3 may be arranged atop the chute guide 4, such that the tubes T may be discharged outside the compartment from the front side.

In the preferred embodiments, in a known manner the apparatus 1 further comprises a tube handler (not shown), arranged downstream the conveyor belt 2 and configured to pick one tube T from the tube discharge area 23 of the conveyor belt 2.

Additionally, in a known manner the apparatus 1 preferably comprises a tube support (not shown), arranged downstream the tube handler and configured to receive one tube T from the tube handler, to move the tube T in the axial direction X-X to the tube working machine, and to hold the tube T upon its working by the working machine. During working, the tube T may still be moved axially and/or circumferentially by the tube support to perform the desired work.

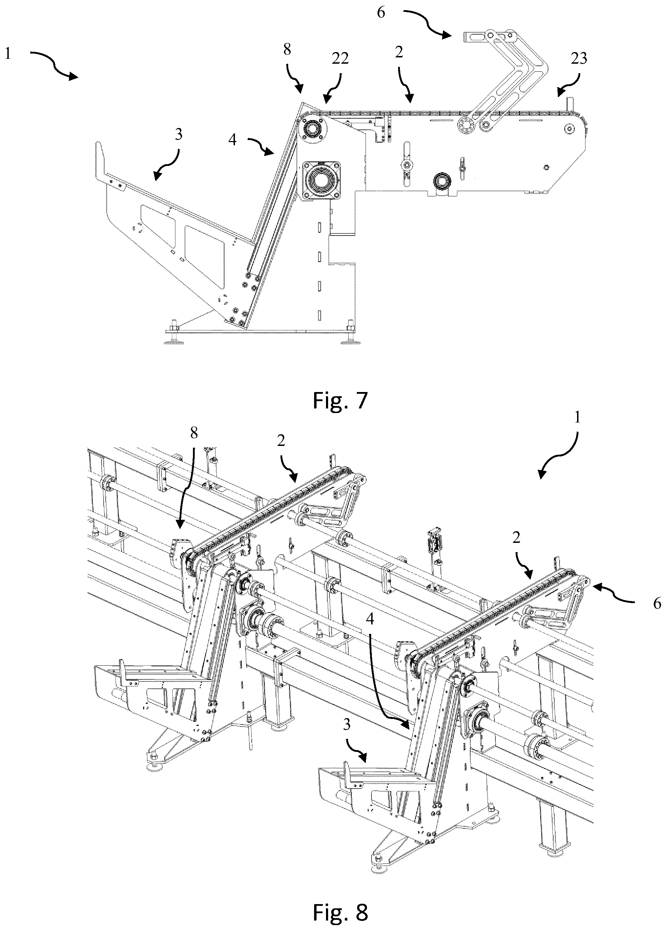

It is worth noting that one unit of the apparatus 1 is described herein, in the preferred embodiment having one conveyor belt 2, one chute 3, one tube handler, and one sample of the further components described below. However, depending on the length of the tubes T, plural such units may be required to manage the tubes T, as shown in figure 8. The units are arranged spaced apart in the axial direction X-X, to simultaneously support different portions of the tubes T. For example, at one time during the process plural conveyor belts 2 may support each a respective end portion or central portion of one and the same tube T.

Instead, only one tube support (possibly including spaced apart support elements) is intended to receive, axially move and hold the tube T received from the tube handlers of different units of the apparatus 1.

Each unit of the apparatus 1 comprises a lift device 5 configured to lift tubes T from the conveyor belt 2. In particular, the lift device 5 has a limit element 51, for example a nail, arranged in a predetermined limit position between the tube receiving area 22 and the tube discharge area 23 of the conveyor belt 2. Further, the lift device 5 has a support portion 52, extending from the limit element 51 toward the tube receiving area 23 of the conveyor belt 2. The limit element 51 projects above the support portion 52.

The apparatus 1 comprises a lift drive (not shown) configured to move the lift device 5 between a raised position and a lowered position. In the lowered position, the lift device 5, and in particular both the limit element 51 and the support portion 52, is arranged below the top surface 21 of the conveyor belt 2. Thus, the lift device 5 does not sustain the tubes T, and does not hinder their movement along the conveyor belt 2.

In the raised position, the support portion 52 is arranged above the top surface 21 of the conveyor belt 2. Thus, in the movement from the lowered to the raised position, the lift device 5 lifts all the tubes T arranged over the support portion 52, namely between the limit element 5 and the tube receiving area 22 of the conveyor belt 2. This tubes T will be sustained by the support portion 52, such that they are no more moved by the conveyor belt 2.

In the movement of the lift device 5 from the lowered to the raised position, the limit element 52 emerges from the top surface 21 of the conveyor belt 2 and projects above it before the support portion 52. The limit element 51 is shaped to pass between adjacent tubes T of the bundle to separate them, such that any tube T upstream the limit element 51 is retained over the support portion 52, and any tube downstream the limit element 52 is left on the conveyor belt 2.

In the opposite movement from the raised to the lowered position, the support portion 52 passes again below the top surface 21 of the conveyor belt 2, such as to no longer sustain the tubes T and let tubes T lay on the conveyor belt 2.

This may be achieved by any known mechanism for the vertical movement of the lift device 5, or for its rotation around an appropriate axis, such as a rear axis, such that the limit element 51 and the support portion 52 are raised without dropping the tubes T.

Each unit of the apparatus 1 comprises a vertical singularizator 6, for preventing the bundle of tubes T to reach the tube discharge portion 23 of the conveyor belt 2 with superimposed tubes T.

The vertical singularizator 6 comprises a first stop element 61, configured to stop stacked tubes T on the conveyor belt 2. The first stop element 61 is arranged at a stop height H above the top surface 21 of the conveyor belt 2. The stop height H is measured from the conveyor belt 2 to a lower surface of the first stop element 61.

The apparatus 1 comprises a first drive 62 connected to the first stop element 61. The first drive 62 is configured to move the first stop element 61 along a first predetermined rotation path. The rotation path is a circular path centered on a first rotation axis extending in the axial direction X-X. Thus, the first stop element 61 is simultaneously moved both in a height direction Z-Z and in the feed direction Y-Y.

With the movement along the first rotation path, the stop height H of the first stop element 61 can be adjusted for different tubes T. In particular, the stop height H can be selected as a function of a type of tubes T being supplied.

It is worth noting that each type of tubes T has a tube height and a tube width. For a tube with circular or square cross-section, the tube height and the tube width are the same. For other shapes, these values will be different, and are evaluated based on an expected orientation of the tube T on the conveyor belt 2, for example a rectangular tube laying on the short side or on the long side of its cross-section.

The stop height H is selected such that a single base row of tubes T on the conveyor belt 2 may pass in the feed direction Y-Y below the first stop element 61, and at the same time tubes T moving in the feed direction Y-Y over the base row are stopped by the stop element 61. In particular, the stop height H is at least the tube height, and is lower than twice the tube height, preferably substantially equal to the tube height.

Optionally, the first drive 62 is also configured to move the first stop element 61 to a rest position below the top surface 21 of the conveyor belt 2, as shown in figure 8.

In the preferred embodiment, the first drive 62 comprises a first motor 63, only a shaft of which is shown in the drawings. Preferably, the first motor 63 is arranged below the top surface 21 of the conveyor belt 2. The first drive 62 further comprises a rotatable first drive arm 64, connecting the first motor 63 to the first stop element 61.

Preferably, the first drive 62 further comprises a first pivot 65, offset from the first motor 63 and in particular from its shaft, preferably in the feed direction Y-Y. A rotatable first driven arm 66 is offset from the first drive arm 64, preferably in the feed direction Y-Y, and connects the first pivot 65 to the first stop element 61.

Thus, the first motor 63, the first drive arm 64, the first pivot 65, the first driven arm 66 and the first stop element 61 define an articulated quadrilateral. Advantageously, the first stop element 61 may move along the first rotation path without rotating about itself. At the same time, the movement of first stop element 61 in the feed direction Y-Y can be permitted without operational problems, and it is not required a special transmission to convert the rotary motion of the first motor 63 into a purely linear motion.

The first stop element 61 is further arranged in the feed direction Y-Y upstream the limit element 51 of the lift device 5, such that the limit element 51 is not reached by tubes T arranged in plural rows, one on another, but only by tubes T of the base row.

Each unit of the apparatus 1 comprises a horizontal singularizator 7, for isolating a single tube T out of the base row of tubes already isolated by the vertical singularizator 6.

The horizontal singularizator 7 comprises a second stop element 71 for stopping the base row of tubes T on the conveyor belt 2, when the second stop element 71 is in a stop position. In the stop position, the second stop element 71 is arranged in the feed direction Y-Y at a stop length L downstream the limit element 61 of the lift device 6.

Each unit of the apparatus 1 comprises a second drive 72 connected to the second stop element 71. The second drive 72 is configured to move the second stop element 71 along a second predetermined rotation path, which is still a circular path centered on a second rotation axis extending in the axial direction X-X. Accordingly, the second stop element 71 is simultaneously moved both in a height direction Z-Z and in the feed direction Y-Y.

With the movement along the second rotation path, the stop length L of the second stop element 71 can be adjusted for different tubes T. In particular, the stop length L can be selected as a function of the type of tubes T being supplied. The stop length L is selected such that a single tube T may be arranged between the second stop element 71 and the limit element 61 of the lift device 6. In particular, the stop length L is substantially equal to the tube width.

Thus, when the second stop element 71 is in the stop position, and the lift device 6 is in the lowered position, tubes T may move on the conveyor belt 2 in the feed direction Y-Y up to the stop length L, that is up to the position of the second stop element 71, and then they are stopped by the second stop element 71. Only one such tubes T will pass beyond the limit element 61, and the remaining tubes T remain behind it. Then, the lift device 5 is raised, such that all the tubes T on the conveyor belt 2 are lifted therefrom, except the single tube T between the second stop element 71 and the limit element 6.

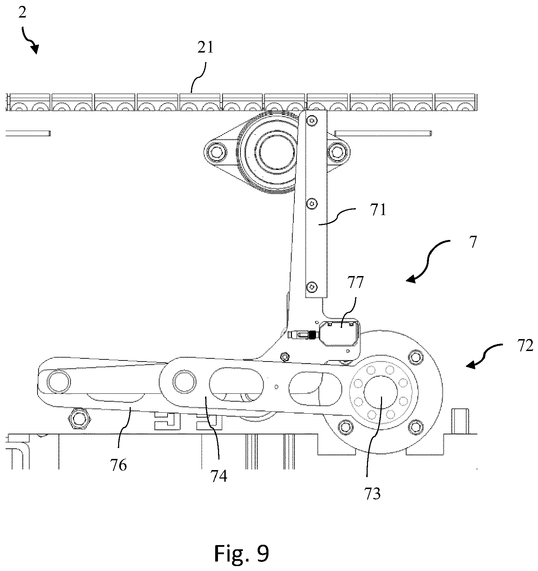

The second stop element 71 is movable, still by the second drive 72, between the stop position and a release position. In the release position, as shown in figure 9, the second stop element 71 is configured to let the isolated single tube T, remaining on the conveyor belt 2, to move in the feed direction Y-Y beyond the stop length L, to reach the tube discharge portion 23 of the conveyor belt 2 and be picked by the tube handler.

Preferably, the second stop element 71 comprises a sensor 77 configured to detect a tube T reaching the stop element 71, as shown in figure 9. This may trigger the second drive 72 to move the stop element 71 from the stop position to the release position.

In one example, the second stop element 71 in the release position is arranged below the top surface 21 of the conveyor belt 2. In another example, the second stop element 71 in the release position is arranged above the top surface 21 by a height at least equal to the tube height. In both cases, this position can be reached starting from the stop position and moving along the second rotation path, with a greater movement compared to the adjustment of the stop length L. During adjustment of the stop length L, movement of the second stop element 71 in the height direction Z-Z is irrelevant. During movement between the stop position and the release position, movement of the second stop element 71 in the feed direction Y-Y is irrelevant.

Similarly to the first drive 62, the second drive 72 comprises a second motor 73 and a rotatable second drive arm 74, connecting the second motor 73 to the second stop element 71. Preferably, the second motor 73 is arranged below the top surface 21 of the conveyor belt 2.

In the preferred embodiment, the second drive 72 further comprises a second pivot 75, offset from the second motor 73, and in particular from its shaft, preferably in the feed direction Y-Y. The second drive 72 may further comprise a rotatable second driven arm 76, offset from the second drive arm 74, preferably in the feed direction Y-Y, and connecting the second pivot 75 to the second stop element 71.

Thus, the second motor 73, the second drive arm 74, the second pivot 75, the second driven arm 76 and the second stop element 71 define another articulated quadrilateral.

In preferred embodiments of the invention, the apparatus 1 may be switched between a rolling tube configuration and a different sliding tube configuration, in order to manage different kinds of tubes T.

In particular, different loading needs are to be dealt with for rolling tubes T and for sliding tubes T. In fact, rolling tubes T undergo a relevant acceleration on the chute 3, and if not properly loaded they may keep on rolling on the conveyor belt 2. The apparatus 1 may work even on very big tubes T, with a significant weight, such that a rolling tube on the conveyor belt 2 will cause a loud noise and may damage the conveyor belt 2 and the singularizators 6, 7.

This is not a problem for sliding tubes T, which are not that much accelerated on the chute 3 and in any case are easily slowed down upon reaching the conveyor belt 2.

For this purpose, in one embodiment, the chute 3 is movable between at least two distinct discharge positions, namely a higher discharge position in the sliding tube configuration and a lower discharge position in the rolling tube configuration.

Thus, in the sliding tube configuration the chute 3 is arranged to discharge the tubes T upon the even portion 24 of the conveyor belt 2. Instead, in the rolling tube configuration, the chute 3 is arranged to discharge tubes rolling down the chute 3 to the round portion of the tube receiving area 22 of the conveyor belt 2. Thus, at least a portion of at least some tubes T on the chute 3 is temporarily below a height of the even portion 24 of the conveyor belt 2, before they are loaded on the conveyor belt 2. For this reason, rolling tubes T do not keep on rolling on the conveyor belt, but are stopped upon reaching the round portion of the tube receiving area 22.

Then, thanks to the movement of the conveyor belt 2, the rolling tubes T are lifted by the round portion of the tube receiving area 22, upon the even portion 24.

In one embodiment, preferably to be combined with the one just described, each unit of the apparatus 1 comprises a conveyor loader 8, configured to guide tubes T from the chute 3 to the conveyor belt 2, in particular from the bottom end portion 31 of the chute 3 to the tube receiving area 22 of the conveyor belt 2, when the chute 3 is in any discharge position.

In the sliding tube configuration, the conveyor loader 8 forms a bridge for tubes T to slide from the chute 3 to the even portion 24 of the conveyor belt 2. Thus, sliding tubes T will be supported, in order, by the chute 3, then by the conveyor loader 8, and then by the conveyor belt 2, directly landing on the even portion 24 thereof. It is to be noted that the conveyor loader 8 prevents sliding tubes T to slide on the chute 3 as down as the round portion of the tube receiving area 22 of the conveyor belt 2.

In the rolling tube configuration, the conveyor loader 2 lets tubes rolling down the chute 3 reach the round portion of the tube receiving area 22 of the conveyor belt 2. In other words, the bridge defined by the conveyor loader 8 in the sliding tube configuration is no longer present in the rolling tube configuration. Again, the rolling tubes are stopped upon reaching the round portion of the tube receiving area 22, and thanks to the movement of the conveyor belt 2, the rolling tubes T are lifted by the round portion of the tube receiving area 22, upon the even portion 24.

In the preferred embodiment, in order to achieve the above functions, the conveyor loader 8 has a barrel portion 81 and a bridge portion 82 with a bridge surface projecting from the barrel portion 81. The conveyor loader 8 is rotatable about a barrel portion axis, preferably being the same as a rotation axis of the pulley supporting the round portion of the tube receiving area 22 of the conveyor belt 2.

In the sliding tube configuration, the bridge portion 82 projects from the conveyor belt 2 toward the chute 3, preferably such that the bridge surface is horizontal or downwardly inclined from the chute 3 to the conveyor belt 2. In the rolling tube configuration, the bridge portion 82 is oriented to no more project from the conveyor belt 2 toward the chute 3. For example, it may be oriented downward or horizontally away from the chute 3.

In other embodiments, no barrel portion 81 may be required, but a bridge portion 82 may be formed with different shapes, such as a panel shape, and may be moved between the rolling tube configuration and the sliding tube configuration in different manners, such as by translating or rotating such that, in the sliding tube configuration, it defined the described bridge from the chute 3 to the conveyor belt 2, and in the rolling tube configuration such bridge is no more present.

A loader drive 83 is configured to switch the conveyor loader 8 between the rolling tube configuration and the sliding tube configuration, preferably by rotating the conveyor loader 8. In the preferred embodiment, the loader drive 83 includes a pneumatic cylinder connected to the barrel portion 81 of the conveyor loader 8.

The apparatus 1 comprises a control unit configured to control its moving parts and their settings during operation of the apparatus 1. The control unit is preferably configured to receive an indication of a tube type, identifying parameters of the tubes T. This indication may be received as an input from an operator through an input interface. In another embodiment, the indication may be received from sensors of the apparatus 1, configured to recognize different tube types, or sensors configured to read a tube type identifier on the tubes T.

Based on the tube type, the control unit is configured to control the first and the second drive 62, 72 to set a specific stop height H and a specific stop length L, which are selected based on the tube type. Moreover, the control unit is preferably configured to control the loader drive 83 to bring the conveyor loader in the rolling tube configuration or sliding tube configuration based on the tube type.

In case the second stop element 71 is not yet in the stop position from the end of a previous cycle, the control unit controls the second stop element 71 to move from the release position to the stop position. In case the lift device 5 is not yet in the lowered position from the end of a previous cycle, the control unit controls the lift device 5 to move from the raised position to the lowered position.

These configuration parameters having been set, the control unit controls the timing of the loading operations. In particular, the chute 3 is moved from the storage position to one discharge position, depending on the number and size of tubes T on the chute 3. In more detail, the selected discharge position will be higher in case of sliding tubes, and lower in case of rolling tubes. Thus, a top group of the bundle of tubes T move down the chute 3 and reach the conveyor belt 2, in different manners depending on the configuration of the conveyor loader 8. The discharge position can be then adapted to discharge further tubes T.

The control unit controls the conveyor belt 2 to move the bundle of tubes T in the feed direction Y-Y. Thus, tubes T reach the vertical singularizator 6, where tubes T above the base row are stopped by the first stop element 61. The base row of tubes T moves on until one tube T reaches the second stop element 71. Then, in different embodiments and depending on the synchronization of the various parts, the control unit may or may not control the conveyor belt 2 to stop.

In both cases, the control unit controls the lift device 5 to move from the lowered position to the raised position. Thus, all the tubes T on the conveyor belt 2 upstream the limit element 51, that is between the tube receiving area 22 and the limit element 51, are lifted from the conveyor belt 2, and only the one tube T having reached the second stop element 71 is left thereon. Additionally, the control unit controls the second stop element 71 to move from the stop position to the release position.

In case the conveyor belt 2 was stopped, the control unit controls the conveyor belt 2 to start again moving, and in particular to move to the tube discharge area 23 the single tube T that remained between the second stop element 71 and the limit element 51.

Finally, the control unit controls the tube handler to pick the tube T from the tube discharge area 23.

From the above, it is already apparent also a method for feeding tubes T to a tube working machine, by means of the described apparatus 1, according to one aspect of the invention.

The method includes moving the first stop element 61 of the vertical singularizator 6 along the first rotation path, to adjust it at the desired stop height H above the conveyor belt 2. Similarly, the method includes moving the second stop element 71 of the horizontal singularizator 7 along the second rotation path, to adjust it in the feed direction Y-Y at the desired stop length L downstream the limit element 51 of the lift device 5.

If applicable, the conveyor loader 8 is moved to the desired configuration being the sliding tube configuration or the rolling tube configuration.

A bundle of tubes T is loaded on the chute 3, move down the chute 3, and is received on the tube receiving area 22 of the conveyor belt 2.

The tubes T are moved on the conveyor belt 2 in the feed direction Y-Y, from the tube receiving area 22 toward the tube discharge area 23. In this movement, a single base row of tubes T passes below the first stop element 61 of the vertical singularizator 6, while tubes T over the base row are stopped in their movement in the feed direction Y-Y by the first stop element 61.

The second stop element 71 of the horizontal singularizator 7, being in the stop position, stops the tubes T moving in the feed direction Y-Y on the conveyor belt 2, such that a single tube T of the base row is arranged between the second stop element 71 and the limit element 51 of the lift device 5, which is in the lowered position.

The lift device 5 lifts from the conveyor belt 2 the tubes T arranged between the tube receiving area 22 and the limit element 51.

The second stop element 71 moves to the release position, and the conveyor belt 2 moves the single tube T, which remained between the second stop element 71 and the limit element 51, in the feed direction Y-Y beyond the stop length L. This tube reaches the tube discharge area 23 and is picked by the tube handler.

Those skilled in the art will obviously appreciate that several changes and variants may be made to the arrangements as described hereinbefore to meet incidental and specific needs. All these variants and changes fall within scope of the invention, as defined in the following claims.

## Claims

1. A feed apparatus (1) for feeding tubes (T) to a tube working machine, comprising:
- a conveyor belt (2) having:
- a top surface (21) with a tube receiving area (22) for receiving a bundle of tubes (T), each tube (T) extending mainly in an axial direction (X-X), and
- a tube discharge area (23),
the conveyor belt (2) being configured to move the tubes (T) in a feed direction (Y-Y), transverse to the axial direction (X-X), from the tube receiving area (22) to the tube discharge area (23),
- a lift device (5) having a limit element (51) arranged between the tube receiving area (22) and the tube discharge area (23) of the conveyor belt (2), the lift device (5) being configured to lift, from the conveyor belt (2), tubes (T) arranged between the tube receiving area (22) and the limit element (51),
- a vertical singularizator (6) comprising:
- a first stop element (61), arranged in the feed direction (Y-Y) upstream the limit element (51) of the lift device (5) and at a stop height (H) above the conveyor belt (2), the stop height (H) being such that a single row of tubes (T) on the conveyor belt (2) may pass in the feed direction (Y-Y) below the first stop element (61), the first stop element (61) being configured to stop tubes (T) moving in the feed direction (Y-Y) over said row, and
- a first drive (72) connected to the first stop element (61), the first drive (72) being configured to adjust the stop height (H) for different tubes (T), by moving the first stop element (61) along a first predetermined rotation path,
- a horizontal singularizator (7), comprising:
- a second stop element (71) movable between a stop position and a release position, wherein,
- in the stop position, the second stop element (71) is arranged in the feed direction (Y-Y) at a stop length (L) downstream the limit element (51) of the lift device (5), and is configured to stop tubes (T) moving on the conveyor belt (2) in the feed direction (Y-Y) up to the stop length (L), the stop length (L) being such that a single tube (T) may be arranged between the second stop element (71) and the limit element (51) of the lift device (5), and
- in the release position, the second stop element (71) is configured to let said single tube (T) move on the conveyor belt (2) in the feed direction (Y-Y) beyond the stop length (L), and
- a second drive (72) connected to the second stop element (71), the second drive (72) being configured to move the second stop element (71) between the stop position and the release position, and to adjust the stop length (L) for different tubes (T), by moving the second stop element (71) along a second predetermined rotation path.

2. The apparatus (1) of claim 1, wherein:
- the first drive (62) comprises a first motor (63) and a rotatable first drive arm (64) connecting the first motor (63) to the first stop element (61), and/or
- the second drive (72) comprises a second motor (73) and a rotatable second drive arm (74) connecting the second motor (73) to the second stop element (71).

3. The apparatus (1) of claim 2, wherein:
- the first drive (62) comprises a first pivot (65), offset from the first motor (63), and a rotatable first driven arm (66), offset from the first drive arm (64) and connecting the first pivot (65) to the first stop element (61), and/or
- the second drive (72) comprises a second pivot (75), offset from the second motor (73), and a rotatable second driven arm (76), offset from the second drive arm (74) and connecting the second pivot (75) to the second stop element (71).

4. The apparatus (1) of claim 2 or 3, wherein the first and/or the second motor (63, 73) is arranged below the top surface (21) of the conveyor belt (2).

5. The apparatus (1) of any claims 1 to 4, wherein, in the release position, the second stop element (71) is arranged below the top surface (21) of the conveyor belt (2).

6. The apparatus (1) of any claims 1 to 5, comprising a chute (3), arranged to discharge a bundle of tubes (T) to the tube receiving area (22) of the conveyor belt (2).

7. The apparatus (1) of claim 6, wherein the chute (3) is movable between a lower discharge position, for discharging on the conveyor belt (2) rolling tubes (T) being suitable to roll down the chute (3), in particular rounded tubes (T), and a higher discharge position, for discharging on the conveyor belt (2) sliding tubes (T) being unsuitable to roll down the chute (3), in particular prismatic tubes (T).

8. The apparatus (1) of claim 6 or 7, comprising a conveyor loader (8) configured to guide tubes (T) from the chute (3) to the conveyor belt (2), wherein:
- the conveyor loader (8) is configured to switch between a rolling tube configuration and a different sliding tube configuration, for guiding from the chute (3) to the conveyor belt (2):
- in the rolling tube configuration, rolling tubes (T) being suitable to roll down the chute (3), in particular rounded tubes (T), and
- in the sliding tube configuration, sliding tubes (T) being unsuitable to roll down the chute (3), in particular prismatic tubes (T).

9. The apparatus (1) of claim 8, wherein:
- the conveyor belt (2) has, at the tube receiving area (22), a round portion winded on a pulley, and an even portion (24) downstream the winded portion,
- in the sliding tube configuration, the conveyor loader (8) forms a bridge for tubes (T) to slide from the chute (3) to the even portion (24) of the conveyor belt (2), and
- in the rolling tube configuration, the conveyor loader (8) lets tubes (T) rolling down the chute (3) reach the round portion of the conveyor belt (2) and be lifted thereby upon the even portion (24).

10. The apparatus (1) of claim 8 or 9, comprising a loader drive (83) configured to switch the conveyor loader (8) between the rolling tube configuration and the sliding tube configuration, by rotating the conveyor loader (8).

11. The apparatus (1) of any claims 6 to 10, wherein the chute (3) is movable between a storage position, for receiving and storing a bundle of tubes (T) therein, and a discharge position, to discharge the bundle of tubes (T) on the conveyor belt (2).

12. The apparatus (1) of any claims 1 to 11, wherein:
- a lift drive is configured to move the lift device (5) between a raised position and a lowered position,
- in the raised position, the limit element (51) projects above the conveyor belt (2) to separate tubes (T) upstream and downstream the limit element (51), and
- in the lowered position, the limit element (51) is arranged below the top surface (21) of the conveyor belt (2).

13. The apparatus (1) of claim 12, wherein:
- the lift device (5) has a support portion (52), extending from the limit element (51) toward the tube receiving area (22) of the conveyor belt (2),
- in the raised position, the support portion (52) is arranged above the conveyor belt (2) to sustain and lift from the conveyor belt (2) tubes (T) arranged between the tube receiving area (22) and the limit element (51), and
- in the lowered position, the support portion (52) is arranged below the top surface (21) of the conveyor belt (2) to let tubes (T) lay on the conveyor belt (2).

14. The apparatus (1) of any claims 1 to 13, comprising a control unit configured to:
- receive an indication of a tube type,
- control the first and the second drive (72) to set a specific stop height (H) and a specific stop length (L), which are selected based on the tube type.

15. The apparatus (1) of any claims 1 to 14, comprising a control unit configured to, in order:
- control the second stop element (71) to assume the stop position,
- control the conveyor belt (2) to move tubes (T) in the feed direction (Y-Y) up to the second stop element (71),
- control the lift device (5) to lift from the conveyor belt (2) tubes (T) arranged between the tube receiving area (22) and the limit element (51),
- control the second stop element (71) to assume the release position, and
- control the conveyor belt (2) to move to the tube discharge area (23) a single tube (T) remaining between the second stop element (71) and the limit element (51).

16. The apparatus (1) of any claims 1 to 15, comprising a tube handler, configured to pick a single tube (T) from the tube discharge area (23) of the conveyor belt (2).

17. A method for feeding tubes (T) to a tube working machine, by means of the apparatus (1) of any claims 1 to 16, comprising:
- moving the first stop element (61) of the vertical singularizator (6) along a first predetermined rotation path, to adjust it at a predetermined stop height (H) above the conveyor belt (2),
- moving the second stop element (71) of the horizontal singularizator (7) along a second predetermined rotation path, to adjust it in the feed direction (Y-Y) at a predetermined stop length (L) downstream the limit element (51) of the lift device (5),
- receiving a bundle of tubes (T) on the tube receiving area (22), the tubes (T) having a tube height not greater than the predetermined stop height (H), and a tube width not greater than the predetermined stop length (L),
- moving the tubes (T) on the conveyor belt (2) in the feed direction (Y-Y), from the tube receiving area (22) toward the tube discharge area (23),
wherein moving the tubes (T) on the conveyor belt (2) comprises passing a single row of tubes (T) below the first stop element (61) of the vertical singularizator (6), and stopping, by the first stop element (61), tubes (T) over said row moving in the feed direction (Y-Y),
- stopping, by the second stop element (71) of the horizontal singularizator (7), the second stop element (71) being in the stop position, the tubes (T) moving in the feed direction (Y-Y) on the conveyor belt (2), such that a single tube (T) of said row is arranged between the second stop element (71) and the limit element (51) of the lift device (5),
- lifting from the conveyor belt (2), by the lift device (5), tubes (T) arranged between the tube receiving area (22) and the limit element (51),
- moving the second stop element (71) to the release position,
- moving, by the conveyor belt (2), said single tube (T) in the feed direction (Y-Y) beyond the stop length (L).
